# EUROPEAN PATENT APPLICATION

(11) **EP 4 043 532 A1**
(43) Date of publication of application: **17.08.2022**
(21) Application number: 20892944.8
(22) Date of filing: 18.02.2020
(51) Int. Cl.: C09K 5/10

(54) **THERMAL TRANSFER FLUID HAVING A COMPOSITION BASED ON THE USE OF WATER**

(30) Priority: 27.11.2019 ES 201931046
(71) Applicant: Compañia Pineda Alvarez, S.L., 41520 El Viso (ES)
(72) Inventor: PINEDA ALVAREZ, Jose Manuel, 41520 EL VISO DEL ALCOR (SEVILLA) (ES)
(74) Representative: Bartrina Diaz, José María
(86) International application number: PCT/ES2020/070113
(87) International publication number: WO 2021/105531

(57) **Abstract**

Heat-transfer fluid with a composition based on the use of water, as a heat dissipating fluid, to which a thickener is added in small proportions to give the fluid viscosity, silicates and soda or potash in order to avoid possible corrosion and maintain a basic pH, being applied to replace conventional thermal oil in its use as a heat dissipating fluid, providing similar thermal performance with less environmental impact.

## Description

Heat-transfer fluid with a composition based on the use of water.

### OBJECT OF THE INVENTION

The invention, as expressed in the statement of this description, refers to a biodegradable and ecological fluid, a substitute for oil in its use as a coolant or heat dissipater in electrical or heating equipment.

The present invention's field of application is within the chemical sector and it proposes a formula for a fluid that replaces oil in its applications within heat dissipating devices, more specifically in the air conditioning industry.

### BACKGROUND OF THE INVENTION

As an introduction to the state of the art in the field, it is appropriate to introduce the concept of "heat dissipating fluid" as any liquid that, once stored in a device for this purpose and when heated using an electrical resistor, circulates inside the circuits of the aforementioned device as a result of the pressure difference that is generated, heating, as a consequence, the environment of the enclosure in which it is located.

Thus, it is known by all how oil-based fluids are used in many commercial and industrial applications, for example, in industrial heating systems with thermal oil, making use of a combustion chamber through a coil. Thus, in these applications, the coil takes energy from combustion, through the low-pressure pumped oil system that circulates therethrough, behaving like a heat-transfer fluid that, when heating the coils, transmits the heat indirectly to a consumer, using the corresponding hydraulic circuit.

Another common application of oil is as a heat-transfer fluid inside a radiator, with an operation very similar to the industrial use of thermal oil. In these applications, the radiator connected to the electrical network provides energy in the form of heat through resistors placed therein. Specifically, these resistors are in direct contact with the fluid or thermal oil contained inside, being provided with the necessary heat and pressure so that it expands and causes the corresponding flow of oil inside the circuit of pipes that contains the radiator to heat the surrounding environment.

In addition, heating systems that use thermal oil can operate at very low pressures, within a temperature range of up to 360°C.

Delving into the origin and characteristics of heat-transfer fluids, they can be classified into synthetic-type or material-type heat-transfer fluids. The first group is made up of petroleum derivatives, to which different additives have been added in order to improve certain properties. On the other hand, mineral-type thermal oils are combinations of hydrocarbons to which different additives have also been added, the fundamental difference between both groups being the temperature range in which they operate, which is higher in synthetic-type thermal oils.

However, the heating systems operating with thermal oil, whether mineral, synthetic or even medicinal, are easily adapted to the requirements of each application, regardless of whether this is for the petrochemical sector, the agri-food industry, the automotive industry, wood, or any other sector or industry.

There are drawbacks to the use of oil in today's society, since it comes from petroleum and, therefore, from fossil fuels, and is a highly polluting fluid that is frequently discharged into the environment without any oversight. Specifically in the case of oil radiators, when their useful life ends, they usually end up in landfills where they are pressed in order to make the most of the metal or casing, and this entails oil being spilled on the ground, generating a considerable environmental impact. For this reason, there is a growing environmental awareness regarding the need to replace these thermal oils with other fluids that have a similar efficiency during their life cycle, but have a considerably smaller impact on the environment once they become waste after use.

In conclusion, the need arises to replace oil as a heat dissipating fluid, since it is usually a highly refined mineral oil produced as a petroleum derivative and, therefore, comes from fossil fuels, which are limited resources in nature and non-renewable. Thus, today's society is becoming increasingly aware of the importance of caring for our environment, making our development sustainable over time in the face of the reality of climate change, as a consequence, among other things, of the disproportionate use of chemical products derived from oil, which at the end of their useful life generate a significant environmental impact.

Considering the inventions present in the state of the art, identified by publication number and title, respectively:
1. ES2384848B1, *High performance and thermodynamic efficiency electric radiator,* in which the use of water as a heat-transfer fluid is proposed, although as it does not incorporate additional substances it does not solve the problems involved in its direct use.
2. ES1072521U, *Low consumption electric convector radiator* in which heat-transfer fluid is proposed in oil or water, although it is obviously a proposal with specific and clearly differentiated purposes.
3. ES2233289T3, *Thermal transfer fluid containing nanoparticles and carboxylates,* referring to the use of submicrometric particles (nanoparticles) and carboxylates to improve the thermal transfer characteristics of thermal transfer fluids or antifreeze coolants.
4. WO2015011318A1 World patent 2014-06-26. PCT/ES2014/070520 *Method for accumulating heat energy in a device with condensable fluid* where the problems associated with the use of water as heat-transfer fluid are already discussed, although it is obviously an invention with clearly differentiated purposes.
5. WO2013182713A1, *Improved heat-transfer fluids,* where a new heat-transfer fluid is proposed that is not based on the use of water.
6. ES2363288A1, *Molten salt solar panel,* which makes use of a molten salt heat-transfer fluid.
7. ES2384848B1, *High performance and thermodynamic efficiency electric radiator,* in which the heat-transfer fluid is water with additives.

Given the aforementioned problems, which have not been resolved by the state of the art, the present invention's proposal consists of replacing thermal oil as a heat dissipating fluid with another fluid that does not come from fossil fuels, improving the environmental impact of the devices that use it both throughout its useful life and thereafter, once it has become waste.

A priori, as a starting condition, a substance must meet the following conditions in order to be used as a heat carrier:
✔ Low purchase price and easy to obtain.
✔ Good thermal stability.
✔ It must not deteriorate the materials of the devices containing it-radiators, pipes, coils, etc.-through corrosion.
✔ Low volatility.
✔ Good heat transfer properties.
✔ Low solidification point and low viscosity.

Regarding the efficiency of its use, it is important to point out that a loss in energy efficiency can have secondary environmental impacts through an increase in the consumption of fossil fuels associated with a greater demand for electrical energy.

In addition, in order to be integrated into the technology and equipment commonly used in the state of the art, it would be desirable for the new resulting fluid to be able to replace the thermal oil without the need to carry out any changes to the existing equipment.

Lastly, it is also important to emphasize the importance that in heat transfer applications it is necessary that the fluid used not be a flammable substance.

The expression "non-flammable" refers to a fire behavior associated with a compound or composition, by virtue of what is laid out in Standard ASTM E-681 of 2002.

Taking into account that the heat transfer agent with the most favorable heating properties is water, as it allows large amounts of heat to be transferred at temperatures of up to 100°C without requiring high pressures, and that it is easily obtainable, research has been carried out to identify a fluid containing water as its main component that can replace thermal oil.

Continuing with the analysis of the behavior of water in the face of changes in temperature and the problem to be solved, it is observed that as the temperature of the water rises to 180°C, it develops a vapor pressure of 10 bar, reaching 50 bar for a temperature of 260°C, which inexorably involves the appearance of a series of risks that make its use more difficult. On the other hand, materials in prolonged contact with water suffer from corrosion and deterioration problems over time, making greater supervision and maintenance necessary, and meaning in practice that the use of indirect steam heating systems is now on the decline.

In light of the foregoing, to obtain the composition of the heat dissipating fluid, the following qualifiers have been put forward:
✔ The fluid could not be composed of substances from fossil fuels.
✔ The use of water as the main component requires a thickening substance that increases the viscosity of the resulting heat-transfer fluid, since water in its pure state has a viscosity that does not make its use viable in a heat dissipation system.
✔ It is necessary for the resulting heat-transfer fluid to not generate corrosion on the inner shell of the device or installation containing it.
✔ Other properties present in the most widespread heat-transfer fluids such as good properties for heat transfer, chemical stability, low or no toxicity and non-flammability.

Based on the background and the problems described, the "Heat-transfer fluid with a composition based on the use of water", proposes a fluid based on water to which a set of components are added, giving it the appropriate characteristics for its use as a heat-transfer fluid, specifically, preventing it from producing the usual corrosion on the containers in contact with water, while its viscosity and energy efficiency is similar to that of the thermal oil it replaces, although it additionally provides the following advantages with respect to the state of the art in the field:
✔ Savings in electrical consumption of the order of 30%, when comparing the use of a conventional thermal oil radiator, with respect to the one that would use the fluid object of the invention, maintaining the same thermal performance.
✔ It allows the direct substitution of thermal oils on the market, since by incorporating carboxymethylcellulose the viscosity of the resulting fluid is increased, making it similar to that of a conventional thermal oil used as a heat sink in most heat-generating devices.
✔ Reduction of the environmental impact associated with the use of the proposed fluid to replace thermal oil, as it does not incorporate any substance from fossil fuels.
✔ Water acquisition cost.

### EXPLANATION OF THE INVENTION

By way of explanation of the invention, the "Heat-transfer fluid with a composition based on the use of water" is based on the use of water (H2O) as a heat dissipating fluid to which the following substances are added in the approximate proportions in weight indicated:
A. Between 0.8% and 1% carboxymethylcellulose, in order to thicken the resulting solution.
B. Between 0.2% and 0.7% silicates.
C. Between 0.3% and 0.5% sodium hydroxide (NaOH) or potassium hydroxide (KOH) as a chemical substance with alkaline properties, in order to prevent corrosion in the device in which the resulting fluid is located and maintain a basic pH.

Based on the composition described, the use of silicates and sodium or potassium hydroxide prevents, on the one hand, the usual corrosion effect of water on the metallic elements with which it is in contact and, on the other, maintains a basic pH in the range between 10 and 12, in which all the properties that the addition of carboxymethylcellulose has provided to the water remain stable.

The aforementioned "Heat-transfer fluid with a composition based on the use of water" is obtained by making use of an industrial reactor provided with the following additional elements:
A. Heating blanket, in order to accelerate and optimize the dissolution of the aforementioned substances.
B. A stirrer that guarantees uniform dissolution throughout the volume of fluid contained in the reactor.

The fluid obtained, object of the present invention, can be applied in any installation or device that requires the use of a heat-transfer fluid for its operation, the most frequent application being therefore in electric oil radiators used in heating systems for buildings, in which it can be used to replace thermal oil without any adaptation of the radiator, providing a thermal performance equivalent to the oil it replaces and even more energy efficient.

Below, illustrative examples of the invention are presented for a better understanding thereof, which, in no case, should be considered a limitation of its scope.

Thus, the aforementioned illustrative examples are tests where the operation of a radiator with different characteristics is compared when replacing the conventional thermal oil with the water-based heat-transfer fluid object of the present invention, in order to evaluate both its thermal performance and its energy efficiency.

### Example 1

A first solution based on the "Heat-transfer fluid with a composition based on the use of water" is used for a five-element oil radiator with a resistance of 1000 W of power, according to the composition shown in Table 1 below;

| Table 1. | |
|---|---|
| Substance | Composition |
| Water (H₂O) | 950ml |
| Carboxymethylcellulose (RₙOCH₂- COOH) | 0.63% |
| Sodium silicate (Na2SiO3) | 0.84% |
| Sodium hydroxide (NaOH) | 0.3% |

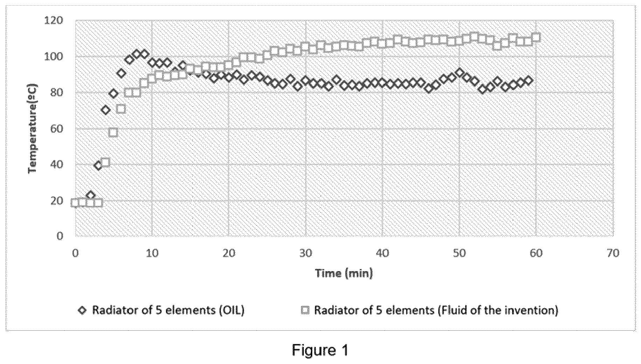

Then, in Figure 1, the data corresponding to the resulting temperatures in the same radiator were collected, both when using oil as a heat-transfer fluid and when replacing it with the fluid object of the present invention, showing that a higher temperature is reached when substitution is carried out.

Evidently, based on the results obtained, with the substitution of the heat-transfer fluid, the power of the resistance used inside the radiator could be reduced by the amount necessary to obtain temperatures similar to those obtained with oil as a heat dissipating fluid, reducing consequently the electrical consumption of the device with the consequent energy saving.

### Example 2

A new solution is prepared with the same composition as that used in Example 1, this time using two equal radiators with seven elements each. Only the power of the resistance housed in the radiator in which the solution based on water with additives is going to be introduced has been reduced by 30%, without altering the original power in the second radiator, in order to carry out a new study of temperatures comparing the temperatures obtained in both radiators.

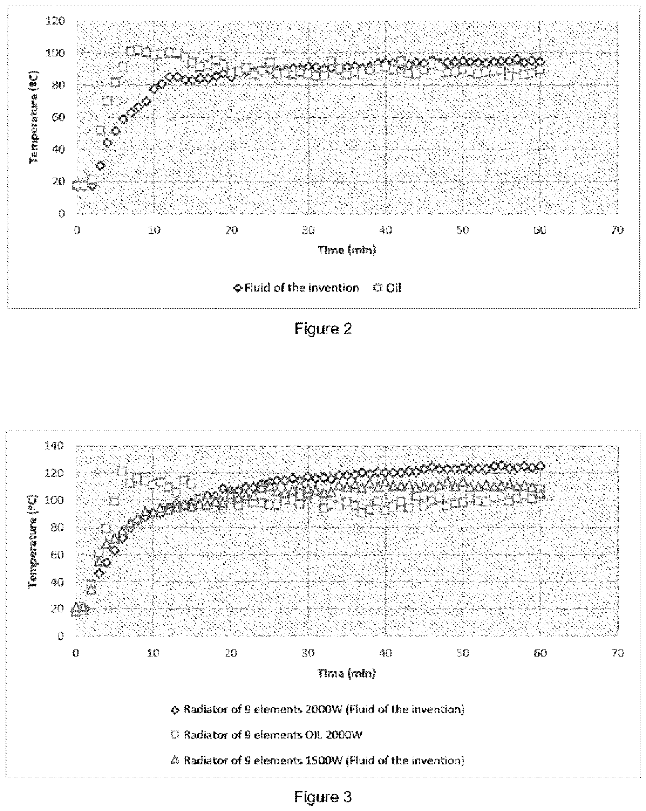

Immediately afterwards, in Figure 2, the temperature data obtained in both radiators were collected, showing that by reducing the power of the radiator by 30%, the use of the solution based on additive water maintains the temperatures in the same range as the provided by the oil-filled radiator, thus providing thermal performance similar to that provided by the conventional oil-filled radiator, although reducing energy consumption by 30%.

### Example 3

As a continuation of the previous examples and in order to confirm that they can be extrapolated to larger radiators, a new solution is prepared for an electric radiator with nine elements.

In this case, a comparison has been conducted of the temperatures provided by three equal radiators, which only differ in the following aspects:
A. An electric radiator with nine elements that maintains the original electric power provided with conventional thermal oil.
B. An electric radiator with a resistance of the same power as in the previous section provided with the water-based fluid object of the present invention.
C. An electric radiator provided with the water-based fluid object of the present invention, with a resistance of a power 30% lower.

As a conclusion of the results obtained, Figure 3 shows how, despite the fact that in the radiator that makes use of the water-based solution, the electrical power has been reduced by 30%, its thermal performance is still above that provided by the oil-filled radiator at a higher electrical output.

### Example 4

Next, a test was carried out in order to assess whether the fluid object of the present invention was actually biodegradable when in contact with plants.

Specifically, tests were carried out with the species "epipremnum aureum", commonly known as "potus", "pothos" or "potos" from the Araceae family native to Southeast Asia.

The tests consisted, for two days a week, of pouring 80 ml of the following varieties of liquids into different pothos:
1. Newly manufactured fluid of the invention.
2. Fluid of the invention has once been used in an electric radiator.
3. Water.

For this purpose, five conveniently numbered pothos were used, from one to five, pouring recently manufactured fluid of the invention in pothos number one and two, fluid of the invention used in an electric radiator in potho number three and water in potho number four and five, the latter called control plants, since the physical comparison of the pothos watered with the fluid of the invention was carried out with the latter to observe the changes they may have during the test.

The result of the test showed that after three months, the plants watered with the fluid of the invention, both new and used, did not exhibit any deterioration, maintaining an appearance similar to that of the first day.

That is, the plants watered with the fluid of the invention had a similar appearance to the control plants, which had been watered only with water, and it can be concluded that during a period of 90 days the plants did not suffer any type of disturbance when watered with the fluid of the invention, since they experienced no apparent physical change during said test period.

Having established the expressed concept, the claims note is presented below, thus summarizing the novelties that are being claimed.

## Claims

1. Heat-transfer fluid with a composition based on the use of water, **characterized by** using water (H2O) as a heat dissipating fluid to which the following substances are added in the approximate proportions by weight indicated:
A. Between 0.8% and 1% carboxymethylcellulose.
B. Between 0.2% and 0.7% silicates.
C. Between 0.3% and 0.5% of a chemical with alkaline properties.

2. Heat-transfer fluid with a composition based on the use of water, according to claim 1, **characterized in that** the chemical substance with alkaline properties is sodium hydroxide (NaOH).

3. Heat-transfer fluid with a composition based on the use of water, according to claim 1, **characterized in that** the chemical substance with alkaline properties is potassium hydroxide (KOH).

4. Equipment for obtaining the "Heat-transfer fluid with a composition based on the use of water" of claims 1-3, **characterized in that** it consists of an industrial reactor equipped with a heating blanket and stirrer.
